# EUROPEAN PATENT APPLICATION

(11) **EP 2 120 129 A1**
(43) Date of publication of application: **18.11.2009**
(21) Application number: 08103998.4
(22) Date of filing: 16.05.2008
(51) Int. Cl.: G06F 3/01, G06F 3/03

(54) **Method for controlling an electronic device through infrared detection**

(71) Applicant: EVERSPRING INDUSTRY CO. LTD., Gueishan Township, Taoyuan County, Taiwan (TW)
(72) Inventor: Huang, Cheng-Hung, Gueishan Township, Taoyuan County (TW)
(74) Representative: Kewitz, Ansgar

(57) **Abstract**

There is disclosed a method for controlling an electronic device through infrared detection includes an infrared sensor to detect displacement alteration waveforms of a targeted object to generate a control signal to control the electronic device. The method includes: setting at least one execution command (step 10); setting an executing condition for each execution command (step 11); getting a detection signal of the infrared sensor (step 12); processing alteration waveforms of the detection signal (step 13); judging whether the detection signal alteration waveforms coincided with the executing condition (step 14); and executing the execution command corresponding to the executing condition (step 15). By means of the method set forth above the infrared sensor can detect movement of the targeted object, and convert the movement to a control means for the electronic device. Thereby through the movement of an object the electronic device can be activated to perform a selected function.

## Description

### FIELD OF THE INVENTION

The present invention relates to a method for controlling an electronic device through infrared detection and particularly to a method to detect a targeted object through infrared ray and by judging movement waveforms of the targeted object to generate a control signal to control an electronic device.

### BACKGROUND OF THE INVENTION

In 1800 Sir William Herschel of U.K. Royal Society published a paper announcing that there is an invisible extended light spectrum beyond the visible red light in the sun light.

Since then the scope and effects of infrared ray have been studied comprehensively. One of the main applications is to detect objects through the infrared ray. As a warm object can radiate infrared ray which can be received and detected by an infrared sensor within a selected range. Different types of infrared sensors can detect infrared rays of varying wavelengths generated by human bodies, animals, plants or even machines. Hence more applications are developed based on this characteristic. Nowadays it is widely used in people's daily life, such as communication, burglar alarming, photo taking and detection of people or object location and the like. For instance, R.O.C. patent No. M320031 entitled "Automatic lighting apparatus by detecting human bodies" includes an infrared sensor to detect human bodies, a photosensitive element and a plurality of LEDs (light emitting diodes). The photosensitive element detects environmental light. In the event that the light is insufficient and there is a person passing through a selected location, the infrared sensor detects the infrared signal of the person and lights the LEDs for a selected time period for illumination. Through the technique and patent previously discussed the location of an object can be detected through the infrared ray. Another example is depicted in U.S. patent No. 7,151,530 entitled "System and method for determining an input selected by a user through a virtual interface". It has a projector to project a virtual interface and a depth sensor to judge the location selected by a user. Then a signal is generated input from the user. The depth distance sensor can serve as a sensor to detect infrared ray. However, all the techniques mentioned above merely detect the location of a human body or other objects without providing commands according to the movement of the targeted object. There are still rooms for improvement in terms of applications of infrared detection. U.S. patent application No. 20080104302 also discloses a technique which has a signal conversion structure to generate a signal table through CPU processing and a memory, and converts a signal to another signal sent to an electronic equipment. But it does not teach the hardware structure required to implement the technique.

### SUMMARY OF THE INVENTION

In view of the shortcomings of the conventional infrared detection techniques that do not generate command signals for the movement of a targeted object, the primary object of the present invention is to provide a technique to generate command signals through infrared ray when movement of a targeted object is detected. The invention includes a method and implementation structure to judge movement of a targeted object through infrared ray and convert to a control signal.

The method according to the invention employs an infrared sensor to detect movement alteration waveforms of a targeted object to generate a control signal to control an electronic device. The method includes: setting at least one execution command; setting an executing condition for each execution command; getting a detection signal of the infrared sensor; processing alteration waveforms of the detection signal; judging whether the detection signal alteration waveforms coincided with the executing condition; and executing the execution command corresponding to the executing condition. By means of the method set forth above the infrared sensor can detect movement of the targeted object, and convert the movement to a control means for the electronic device. Thereby through the movement of an object the electronic device can be activated.

The foregoing, as well as additional objects, features and advantages of the invention will be more readily apparent from the following detailed description, which proceeds with reference to the accompanying drawings.

### BRIEF DESCRIPTION OF THE DRAWINGS

- FIG. 1: is a process flowchart of the method of the invention.
- FIG. 2: is a circuit block diagram to implement the method of the invention.
- FIG. 3: is a schematic view of a sensor in a detection process.
- FIG. 4A: is a schematic view of an embodiment in use condition-1.
- FIG. 4B: is a schematic view of an embodiment in use condition-2.
- FIG. 4C: is a schematic view of an embodiment in use condition-3.
- FIG. 5: is a schematic view of another embodiment of the invention.

### DETAILED DESCRIPTION OF THE PREFERRED EMBODIMENTS

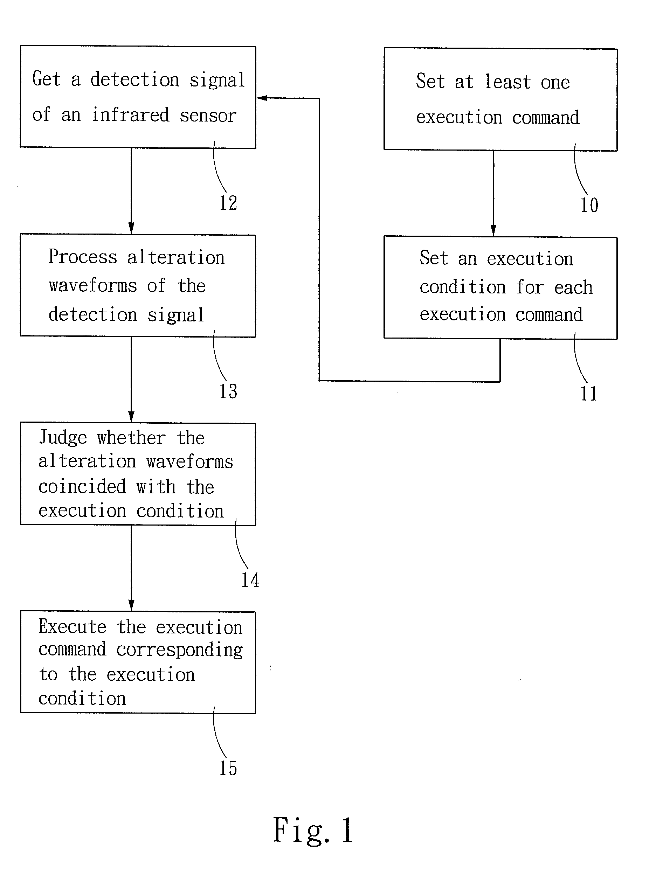

The method for controlling an electronic device through infrared detection according to the invention detects the movement of a targeted object through an infrared sensor. The movement of the targeted object forms an alteration waveform in the infrared sensor to generate a control signal to control the electronic device. The method includes the following steps: A. setting at least one execution command; B. setting an executing condition for each execution command; C. getting a detection signal of the infrared sensor; D. processing alteration waveforms of the detection signal; and E. judging whether the detection signal alteration waveforms coincided with the executing condition, and executing the execution command corresponding to the executing condition. The execution command aims to control the electronic device to perform a selected function. The detection signal is generated by the infrared sensor by judging the location of the targeted object. In the event that the infrared sensor detects a movement occurred to the targeted object, alteration waveforms of the detection signal is determined. Thereby the alteration waveforms are converted to the execution command to control the electronic device. Refer to FIG. 1 for the process flowchart of the method previously discussed. First, set at least one execution command (step 10); next, set an executing condition for each execution command (step 11); get a detection signal of an infrared sensor (step 12); process alteration waveforms of the detection signal if the targeted object moves (step 13); judge whether the detection signal alteration waveforms coincided with the executing condition (step 14), and finally execute the execution command matching the executing condition (step 15). The execution command aims to generate a control signal corresponding to a selected function of the electronic device, and transmit the control signal to the electronic device to activate the selected function thereof. By means of the method set forth above the infrared sensor can detect the movement of the targeted object such as a user's hand moving in front thereof, and process the alteration waveform of the detection signal. Then the altered waveform is converted to a control signal for the electronic device. As a result, the electronic device can function without direct touch of the user in front of the infrared sensor, and the object of the invention can be accomplished.

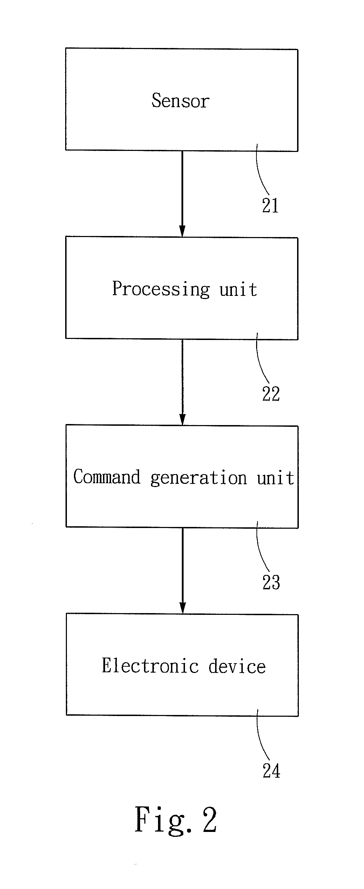

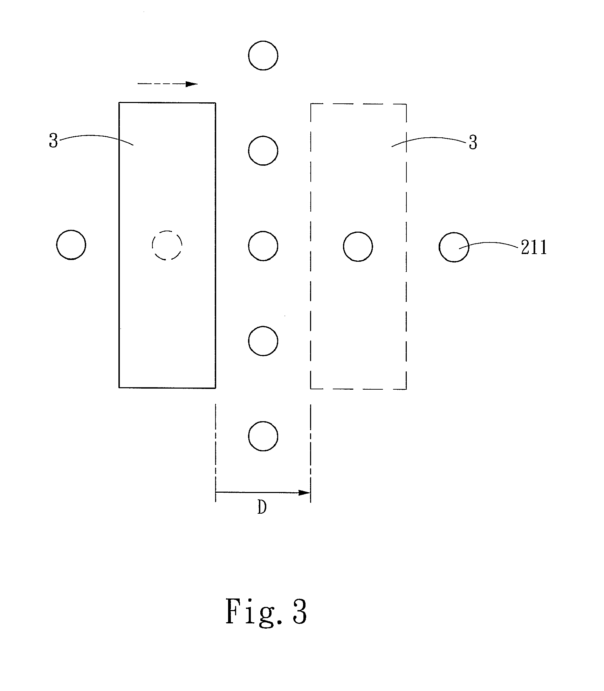

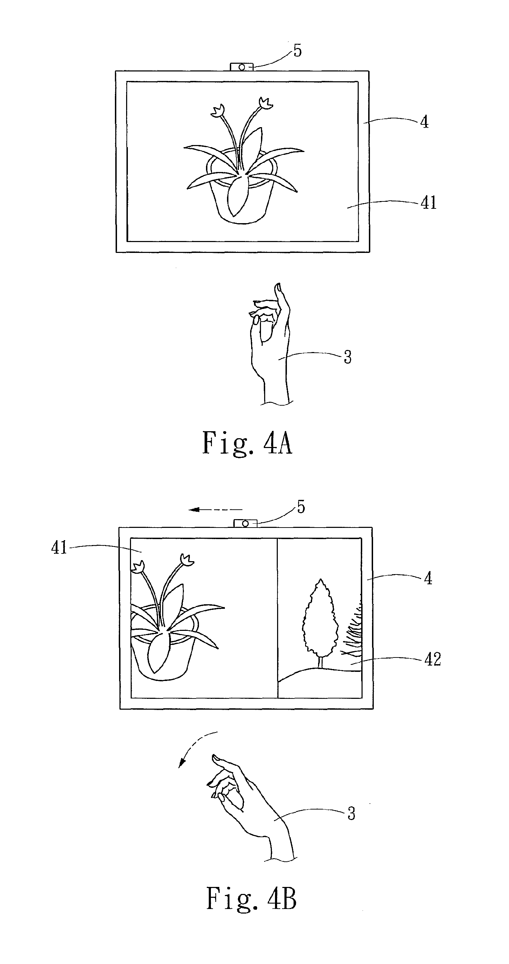

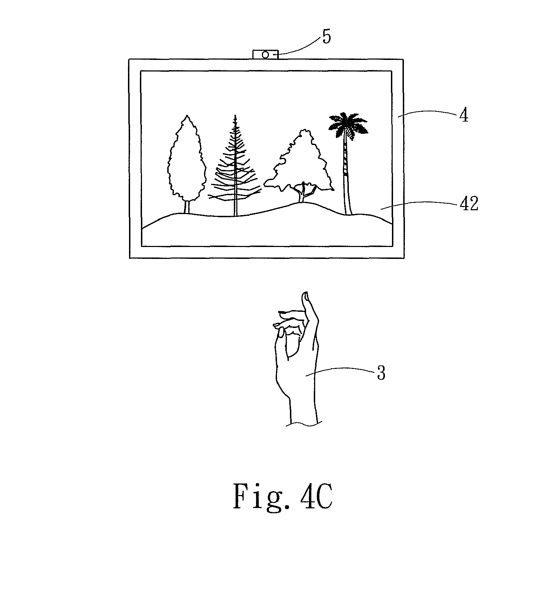

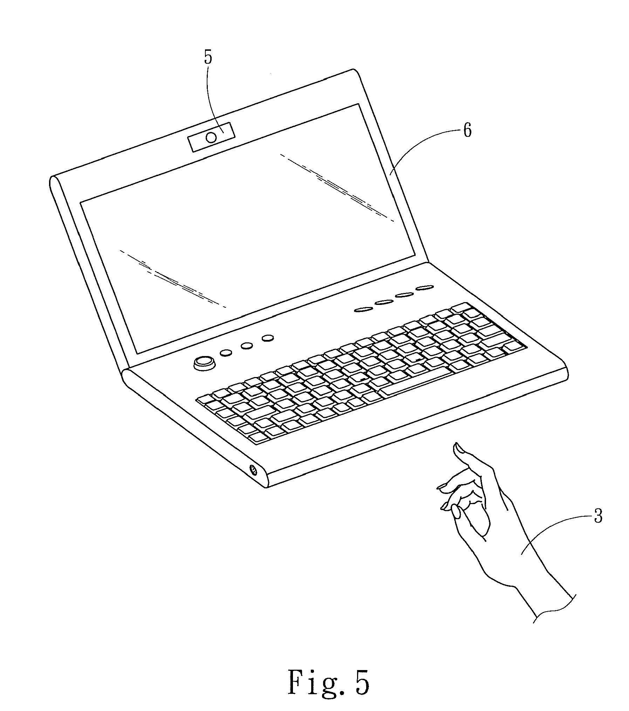

Refer to FIG. 2 for the circuit block diagram to implement the invention. The infrared sensor has a sensor 21 which includes a plurality of detection elements 211 (also referring to FIG. 3) to detect a targeted object 3 (also referring to FIGS. 4A through 4C, and FIG. 5) and generate the detection signal. The detection elements 211 are arranged at different locations. When the targeted object 3 moves, the detection signal detected by each detection element 211 alters. In practice, the detection signal in the sensor 21 is presented or transmitted in the form of electric waves. Hence an alteration of the detection signal forms an alteration waveform along the moving path of the targeted object 3. The principle of generating the detection signal and alteration waveform is known in the art, thus details are omitted. The sensor 21 is connected to a processing unit 22 which receives the detection signal and judges the difference between the detection signal and the alteration waveform to generate an alteration waveform signal. The processing unit 22 may include a plurality of trigger circuits. Each trigger circuit can be actuated by different electric polarity or amount through a voltage dividing means. The design of the trigger circuit also is a technique known in the art. The trigger circuit is triggered by the alteration waveform to generate an execution command signal sent to a command generation unit 23. The command generation unit 23 receives the command execution signal to generate a control signal sent to an electronic device 24. Thus through the circuit structure previously discussed, upon moving of the targeted object 3, the alteration waveform of the detection signal is converted to the control signal to control operation of the electronic device 24.

Referring to FIG. 3, the sensor 21 has multiple detection elements 211 to detect the moving targeted object 3. Each of the detection elements 211 can detect the targeted object 3 to get a detection signal. The detection elements 211 may be arranged in different axial directions and spaced from one another at selected distances. Hence detection of the movement of the targeted object 3 by the detection elements 211 can include movements in different directions and distances. The waveforms of the electronic signal obtained by the detection elements 211 resulting from movement of the targeted object 3 are presented to reflect as much actual condition as possible. After the detection elements 211 have detected the direction and distance D of the alteration waveforms caused the movement of the targeted object 3, the processing unit 23 and the command generation unit 23 convert to the control signal. Different alteration waveform directions and distance D are generated corresponding to the different moving directions and distance of the targeted object 3. According to the method previously discussed, the execution conditions of different execution commands may be different moving directions or distance of the targeted object 3, or combination thereof. For instance, if the execution condition is set to moving the targeted object 3 to the right for 10 cm, in the event that the direction and distance of the alteration waveform are coincided with the aforesaid execution condition, a corresponding control signal is generated through the method and circuit structure set forth above to actuate the electronic device 24 to perform operation desired.

Please referring to FIGS. 4A through 4C, the electronic device 24 may be a digital photo frame 4 which has an infrared sensor 5 located thereon. The digital photo frame 4 displays an image A (41). The targeted object 3 may be a user's hand. When the infrared sensor 5 detects that the targeted object 3 moves towards the left side to accomplish an execution condition of a preset function of replacing a photo, the digital photo frame 4 executes the function by replacing the photo until the image A (41) is moved leftwards and vanishes, and replaced by another image B (42). Refer to FIG. 5 for another embodiment of the invention. In this embodiment the invention is adopted on a computer 6 equipped with an infrared sensor 5. By moving the targeted object 3 the computer 4 is ordered to perform an intended operation, such as moving the cursor, entering a selected character, or selecting and executing a desired file or the like.

In summary there is disclosed a method for controlling an electronic device 24 through infrared detection includes an infrared sensor 5 to detect displacement alteration waveforms of a targeted object 3 to generate a control signal to control the electronic device 24. The method includes: setting at least one execution command; setting an executing condition for each execution command; getting a detection signal of the infrared sensor 5; processing alteration waveforms of the detection signal; judging whether the detection signal alteration waveforms coincided with the executing condition; and executing the execution command corresponding to the executing condition. By means of the method set forth above the infrared sensor 5 can detect movement of the targeted object 3, and convert the movement to a control means for the electronic device 24. Thereby through the movement of an object the electronic device 24 can be activated to perform a selected function.

The method and embodiments set forth above clearly shows that the present invention offers a significant improvement over the conventional techniques.

While the preferred embodiments of the invention have been set forth for the purpose of disclosure, modifications of the disclosed embodiments of the invention as well as other embodiments thereof may occur to those skilled in the art. Accordingly, the appended claims are intended to cover all embodiments which do not depart from the spirit and scope of the invention.

## Claims

1. A method for controlling an electronic device through infrared detection that detects displacement alteration waveforms of a targeted object (3) through an infrared sensor (5) to generate a control signal to control the electronic device (24), the method
**characterized by**:
setting at least one execution command to control the electronic device (24) to perform a selected function (step 10);
setting an executing condition for each execution command (step 11);
getting a detection signal of the infrared sensor (5) that is generated by the infrared sensor (5) by judging the location of the targeted object (3) (step 12);
processing alteration waveforms of the detection signal, the alteration waveforms being determined by the infrared sensor (5) by detecting a location movement of the targeted object (3) (step 13); and
judging whether the detection signal alteration waveforms coincided with the executing condition (step 14), and executing the execution command corresponding to the executing condition (step 15).

2. The method of claim 1, wherein the location movement of the targeted object (3) includes different moving directions and moving distances of the targeted object (3), and different detection signal alteration waveforms are generated corresponding to the different moving directions and distances.

3. The method of claim 2, wherein the execution condition of different execution commands is the different moving directions of the targeted object (3).

4. The method of claim 2, wherein the execution condition of different execution commands is the different moving distances of the targeted object (3).

5. The method of claim 2, wherein the execution condition of different execution commands is combinations of the different moving directions and moving distances of the targeted object (3).

6. The method of claim 1, wherein the execution command generates a control signal corresponding to a selected function of the electronic device (24), the control signal being transmitted to the electronic device (24) to activate the selected function of the electronic device.

7. The method of claim 1 further having a circuit structure to implement the method, the circuit structure including a sensor (21) located in the infrared sensor (5), the sensor (21) having a plurality of detection elements (211) to detect the targeted object (3) to generate the detection signal, the sensor (21) being connected to a processing unit (22) which receives the detection signal and judges the alteration waveforms of the detection signal to generate an alteration waveform signal, the processing unit (22) further having at least one trigger circuit triggered by the alteration waveform signal to generate an execution command signal sent to a command generation unit (23) which generates the control signal sent to the electronic device (24).

8. The method of claim 7, wherein the processing unit (22) has a plurality of trigger units, each of the trigger units being triggered by a different electric polarity or amount.

9. The method of claim 7, wherein the processing unit (22) and the command generation unit (23) are integrated into a circuit board independent from the infrared sensor (5).

10. The method of claim 7, wherein the processing unit (22) and the command generation unit (23) are integrated into the infrared sensor (5).

11. The method of claim 1, wherein the electronic device (24) is a digital photo frame (4).

12. The method of claim 1, wherein the electronic device (24) is a computer (6).

13. A circuit structure to implement a method, according one of claim 1 to 12, the circuit structure including a sensor (21) located in the infrared sensor (5), the sensor (21) having a plurality of detection elements (211) to detect the targeted object (3) to generate the detection signal, the sensor (21) being connected to a processing unit (22) which receives the detection signal and judges the alteration waveforms of the detection signal to generate an alteration waveform signal, the processing unit (22) further having at least one trigger circuit triggered by the alteration waveform signal to generate an execution command signal sent to a command generation unit (23) which generates the control signal sent to the electronic device (24).

14. An electronic device (24) having circuit structure to implement a method according one of claim 1 to 12, the circuit structure including a sensor (21) located in the infrared sensor (5), the sensor (21) having a plurality of detection elements (211) to detect the targeted object (3) to generate the detection signal, the sensor (21) being connected to a processing unit (22) which receives the detection signal and judges the alteration waveforms of the detection signal to generate an alteration waveform signal, the processing unit (22) further having at least one trigger circuit triggered by the alteration waveform signal to generate an execution command signal sent to a command generation unit (23) which generates the control signal sent to the electronic device (24).

15. The electronic device (24) of claim 14, wherein the electronic device (24) is a digital photo frame (4) or a computer (6).
